Europäisches Patentamt

(19) European Patent Office

Office européen des brevets

(11) Publication number: **0 125 821**

**A2**

# (12) EUROPEAN PATENT APPLICATION

(21) Application number: **84302773.1**

(22) Date of filing: **25.04.84**

(51) Int. Cl.³: **F 16 L 3/22**
**B 65 D 71/02, F 16 B 2/08**

(30) Priority: **04.05.83 GB 8312164**

(43) Date of publication of application:
**21.11.84 Bulletin 84/47**

(84) Designated Contracting States:
**AT BE CH DE FR IT LI LU NL SE**

(71) Applicant: **PLESSEY OVERSEAS LIMITED**
**Vicarage Lane**
**Ilford Essex IGI 4AQ(GB)**

(72) Inventor: **O'Halloran, Vincent Victor**
**41, Elmswood Road**
**Liverpool L17 0DH(GB)**

(74) Representative: **Hart, Robert John**
**Plessey Telecommunications Limited Edge Lane**
**Liverpool L7 9NW(GB)**

(54) Clamp for a cable or the like.

(57) The clamp consists of a u-shaped plastic strip (1) having toothed legs (2) (3). The teeth (7) are arranged to engage against and behind the edge (6) of apertures (5) in a supporting surface (4) to which the clamp is to be secured. In operation as the clamp is pushed over a group of cables (c) it tightens the cables against a supporting surface (4). The clamp is retained in position by the teeth engaging against and behind the aperture edge. An outward force is induced in the clamp by the initial deflection of the clamp legs to engage the panel aperture and by the clamped cables pushing outwards against the clamp legs.

Fig. 2

EP 0 125 821 A2

TITLE:   CLAMP FOR A CABLE OR THE LIKE

The present invention relates particularly, although not exclusively, to cable clips or clamps and is concerned with the provision of a cable clip or clamp suitable for clamping cables, or the like, to a mounting or supporting surface.

Cables are presently secured with either metal or plastic clips or clamps.  They can also be run in ducting or tied to a surface with string or plastic cable ties. All these methods are time-consuming for cabling personnel, as they usually require either a screwing operation or require lacing the string or cable ties behind a supporting mounting surface.

Particular types of plastics cable clips, or clamps employed for clamping cables to a supporting surface are generally of the type in which when they are placed around the cable to be secured they interlock with an appropriate portion of the same clip.  The clamp is usually secured directly, by means of an integral part to the supporting surface to which the cable is to be clamped, or indirectly by separate means cooperating with the clamp and being attachable to the supporting surface by a common fixing means i.e. a screw, nut and bolt etc.

Certain disadvantages present themselves in particular applications of these beforementioned clamps, for instance, fixing requires the use of tools and a degree of cabling personnel time and skill.

The object of the invention is to provide a simple means of quickly securing cables or the like to a mounting surface with the minimum of piece parts.

According to the present invention there is provided a clamp comprising a 'U'-shaped strip of material having two legs each of which incorporates engagement means, the clamp being arranged, in use, to enclose an item or items to be clamped to a supporting surface such that each leg of the clamp extends through an aperture on the supporting surface enabling the engagement means to releasably engage the aperture edge in such manner as to clamp the item to the supporting surface.

In operation, as the clip or clamp is pushed over a group of cables it tightens the cables against a supporting surface. The clamp is retained in position by the teeth engaging against and behind the aperture edge. An outward force is induced in the clamp by the initial deflection of the clamp legs to engage an aperture in a panel or supporting surface, and by the clamped cables pushing outwardly against the clamp legs.

The invention will be more readily understood from the following description of an exemplary embodiment which should be read in conjunction with the accompanying drawing in which;

Fig. 1 shows the clip or clamp according to our embodiment of the invention;

Fig. 2 shows the use of the clip or clamp in its normal clamping arrangement; while,

Fig. 3 shows one method of adding cables to a clamped bunch using the clip or clamp according to the embodiment of the invention.

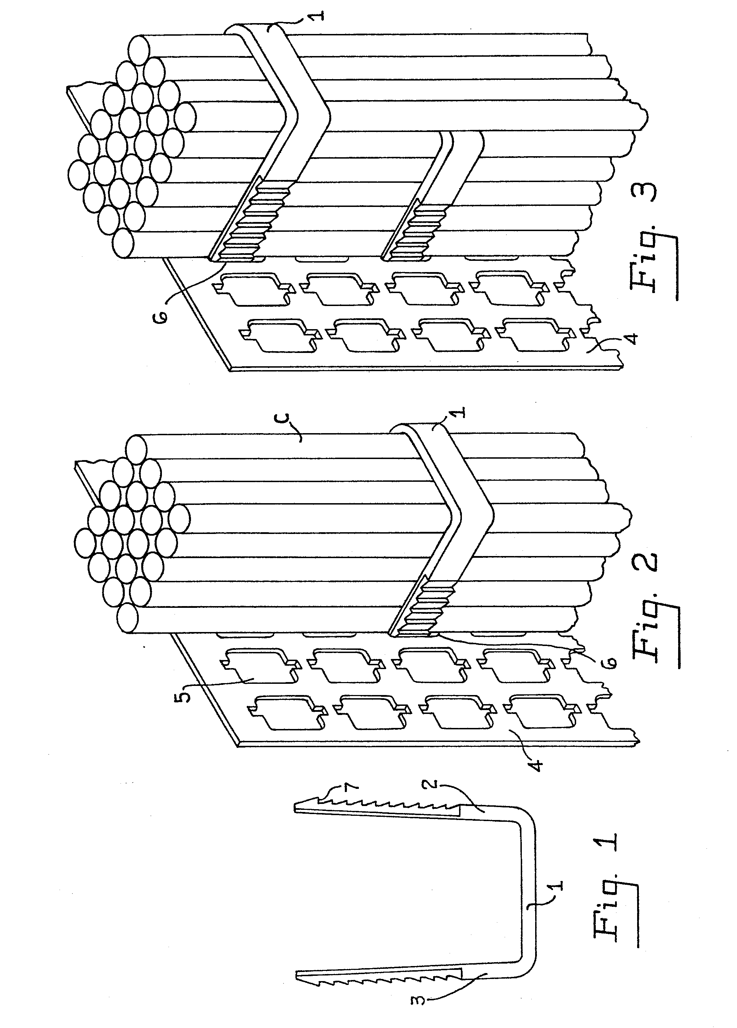

Referring to the drawings, the clamp consists of a u-shaped nylon strip 1 having legs 2 and 3 incorporating engagement means or teeth 7. The teeth 7 are arranged to engage against and behind the edge 6 of apertures such as 5 in a supporting surface or wall 4 to which the clamp is to be secured. In operation, as can be seen in Figs. 2 and 3, as the clamp 1 is pushed over a group of cables C it tightens the cables against the supporting surface 4. The clamp 1 is retained in position by the teeth of each leg engaging against and behind an aperture edge 6. An outward force is induced in the clamp by the initial deflecting of the clamp legs inwardly to engage the panel aperture 5 and by the clamped cables pushing outwardly against the clamp legs to provide an outward force to enable the legs to cooperate with the aperture edge 6.

The clamp 1 is preferably moulded in a variety of sizes within multi-impression tools or extruded in long strips and cut to the required size. It can be used in any industry where a cable, group of cables require securing. When the supporting surface 4 has no apertures, two oppositely positioned holes (not shown) can be added to facilitate fitting of the clamp so that each leg of the clamp can locate into its own hole.

When cables are added to an existing clamped bunch of cables, one of the following methods can be used:

1. The clamp is removed by depressing the legs inwardly by hand or with a special "tongs action" type tool thereby disengaging the teeth 7. The cables are then added and the clamp is re-fitted. See Fig. 2.

2. An additional clamp can be fitted adjacent to the existing clamp, as shown in Fig. 3.

Although the embodiment has been described with reference to a clamp having legs which engage the edge of separate apertures, it is envisaged that a single aperture could be provided in the supporting surface whereby the legs engage opposite edges of the same aperture.

In all circumstances as the clamp is pushed over a group of cables, it tightens the cables against a supporting surface. The clamp is retained in position by its teeth engaging against and behind the aperture edge. This effect is produced as a result of an outward force being induced in the clamp, by the initial deflection of the clamp legs to engage the aperture and by the clamped cables pushing outwardly against the clamp legs.

It should be appreciated that the use of this type of clamp requires a minimum of cabling personnel time and generally requires no assembly tools or special skills. Although a tool can be used to remove the clamp, as has been mentioned, this is not entirely necessary as this clamp can be removed easily by hand.

It should be understood that while the embodiment shown and described relates to the clamping of cables it is envisaged that this invention could be equally effective in clamping a pipe or plurality of pipes. This particular application of the clamp could more suitably be manufactured in metal.

CLAIMS:-

1. A clamp comprising a 'U'-shaped strip of material having two legs each of which incorporates engagement means, the clamp being arranged, in use, to enclose an item or items to be clamped to a supporting surface such that each leg of the clamp extends through an aperture on the supporting surface enabling the engagement means to releasably engage the aperture edge in such manner as to clamp the item to the supporting surface.

2. A clamp as claimed in claim 1, in which the engagement means comprises a plurality of teeth which engage against and behind the edge of the aperture.

3. A clamp as claimed in claim 2, in which the clamped items are arranged to push outwardly against the two clamp legs to provide an outward force to enable them to cooperate with the aperture edge.

4. A clamp as claimed in claim 1 in which each leg of the clamp engages an edge of separate apertures.

5. A clamp as claimed in claim 1, in which the legs of the clamp engage opposite edges of the same aperture.

6. A clamp as claimed in any one preceding claim, in which the item or items is a single cable or a plurality of cables.

7. A clamp as claimed in any one of claims 1 to 5, in which the item or items is a single pipe or a plurality of pipes.

8.    A clamp as claimed in any preceding claim in which the clamp is manufactured in plastics.

9.    A clamp as claimed in any one of claim 7 in which the clamp is manufactured in metal.

Fig. 1

Fig. 2

Fig. 3

0125821